(19) Europäisches Patentamt

European Patent Office

Office européen des brevets

(11) **EP 0 723 945 A2**

(12) **EUROPÄISCHE PATENTANMELDUNG**

(43) Veröffentlichungstag:
**31.07.1996 Patentblatt 1996/31**

(51) Int. Cl.$^6$: **C04B 38/08**

(21) Anmeldenummer: 96101220.0

(22) Anmeldetag: **29.01.1996**

(84) Benannte Vertragsstaaten:
**AT BE CH DE DK ES FR GB IE IT LI NL PT SE**

(30) Priorität: **17.10.1995 DE 19538667**
**30.01.1995 DE 19502872**

(71) Anmelder: **COMTRADE Ltd**
**1006 Lausanne (CH)**

(72) Erfinder: **Mevissen, Klaus**
**D-41749 Viersen (DE)**

(74) Vertreter: **Weiss, Wolfgang, Dipl.-Chem. Dr.**
**Patentanwälte**
**Weickmann & Partner,**
**Kopernikusstrasse 9**
**81679 München (DE)**

(54) **Herstellung von wärmeisolierenden Formkörpern unter Verwendung von Hohlkugeln**

(57)     Die Erfindung betrifft ein Verfahren zur Herstellung von wärmeisolierenden Formkörpern, sowie die Verwendung der wärmeisolierenden Formkörper zur Wärmedämmung.

EP 0 723 945 A2

**Beschreibung**

Die Erfindung betrifft ein Verfahren zur Herstellung von wärmeisolierenden Formkörpern, sowie die Verwendung der wärmeisolierenden Formkörper zur Wärmedämmung.

Verfahren zur Herstellung von wärmeisolierenden Formkörpern aus keramischen, feuerfesten oder feuerbeständigen Substanzen und Fasern sind im Stand der Technik beschrieben (DE-OS 34 44 397; DE-AS 1947 904; AT-PS 379 365). Bei diesen Verfahren wird mittels Verfilzung der anorganischen Fasern eine Bindematrix gebildet. Dadurch werden leichte (Dichte ca. 100 kg/m$^3$), temperaturwechselbeständige und wärmeisolierende Formkörper erhalten. Die Formkörper haben eine große Porösität, die durch die Fasermatrix bedingt ist. Der Einsatz anorganischer Fasern ist jedoch in vielen Anwendungsbereichen problematisch. Erwähnt sei hier nur, daß z.B. viele anorganische Fasern in Verdacht stehen, karzinogen zu wirken.

Weiterhin sind Verfahren zur Herstellung von sogenannten Feuerleichtsteinen aus einer Baustoffmischung sowie Verfahren zur Herstellung von Formkörpern aus dieser Mischung bekannt, bei welchen neben feuerfesten oder feuerbeständigen Substanzen auch organische Füll- bzw. Zuschlagsstoffe in Form von Holzmehl, Zellstoff oder Baumwollbruch oder porenbildende Stoffe eingesetzt werden (DE 28 16 457 A1; DE 28 58 762; DE 33 02 368 A1; DE 33 26 270). Die Wärmeleitfähigkeit dieser Füllstoffe enthaltenden Formkörper ist aber relativ hoch.

Aufgabe der vorliegenden Erfindung ist die Bereitstellung eines Verfahrens zur Herstellung von wärmeisolierenden Formkörpern in dem die Nachteile des Standes der Technik zumindest teilweise beseitigt sind.

Die Aufgabe wird erfindungsgemäß gelöst durch die Bereitstellung eines Verfahrens zur Herstellung von wärmeisolierenden Formkörpern aus keramischen, feuerfesten oder feuerbeständigen Hohlkugeln und feuerfesten oder feuerbeständigen Bindemitteln, worin die Formkörper aus einer feuchten Mischung der Ausgangsmaterialien umfassend die Hohlkugeln und Bindemittel hergestellt und anschließend getrocknet werden.

Mit diesem Verfahren können überraschenderweise wärmeisolierende Formkörper hergestellt werden, die eine geringe Dichte, gute wärmeisolierende Eigenschaften und eine niedrige Wärmeleitfähigkeit aufweisen, sowie beständig gegenüber Temperaturwechseln sind. Die erfindungsgemäß hergestellten Formkörper enthalten keine anorganischen Fasern und keine organischen Füllstoffe und somit auch nicht die mit diesen Stoffen verbundenen Nachteile. Erfindungsgemäß kann durch die Verwendung von Hohlkugeln und Bindemitteln auch auf Plastifizierer und Porenbildner verzichtet werden.

Die anschließende Trocknung erfolgt sehr langsam, da der feuchte Anteil der Mischung oft sehr groß ist. Die verwendeten Trocknungstemperaturen sind abhängig vom Bindemittel. Trocknungstemperaturen von ca. 50°C bis 70°C haben sich als geeignet erwiesen um Trockenrisse zu vermeiden. Anschließend wird der Formkörper erfindungsgemäß bevorzugt bei Temperaturen gebrannt, bei denen sich die Bindemittel in unlösliche keramische Bindungen umwandeln oder/und aushärten. Geeignete Brenntemperaturen werden in Abhängigkeit des verwendeten Bindemittels gewählt, beispielsweise betragen die Brenntemperaturen bei Aluminiumhydroxychlorid als Bindemittel 1400 - 1800°C.

Bei den erfindungsgemäß verwendeten Hohlkugeln handelt es sich bevorzugt um kugelförmige Körner mit Durchmessern von 10 - 600 µm. Vorzugsweise werden Kohlkugeln mit geschlossener, glatter und glasähnlicher Oberflächenstruktur und mit einer geringen Wandstärke zur Erzielung geringer Schüttdichten von weniger als 500 kg/m$^3$ verwendet. Solche Hohlkugeln bestehen beispielsweise aus Aluminiumoxid.

Bei dem erfindungsgemäßen Verfahren werden die wärmeisolierenden Formkörper aus einer Mischung der Ausgangsmaterialien hergestellt, wobei die Ausgangsmischung bevorzugt Hohlkugeln zu Bindemittel im Verhältnis 95 : 5 bis 20 : 80 enthält. Es hat sich gezeigt, daß eine schonende Vermischung der Rohstoffe notwendig ist, da ansonsten ein Teil der Hohlkugeln mechanisch zerstört werden kann. Dies hat eine Verschlechterung der Wärmeleitfähigkeit zur Folge. Zu dem wird durch beschädigte Hohlkugeln der Binderanteil im Formkörper erhöht.

Die feuchte Ausgangsmischung kann erfindungsgemäß zu beliebigen wärmeisolierenden Formkörpern ausgeformt werden und bevorzugt zu Platten. Die Formkörper werden bevorzugt mit einem Raumgewicht von weniger als 500 kg/m$^3$ hergestellt.

In einer bevorzugten Ausführungsform der Erfindung wird die feuchte Ausgangsmischung zunächst vorgeformt und dann aus dem vorgeformten Material der Formkörper hergestellt und anschließend getrocknet. Bei der Vorformung wird die feuchte Mischung durch Öffnungen durchgedrückt. Bevorzugte Öffnungen sind Düsen oder Siebe. Das Durchdrücken kann auf bekannte Arten erfolgen, z.B. durch Pressen, Schieben, Schichten oder Schaben. Das Ausgangsmaterial wird durch Öffnungen der Austrittsmatrix des Vorformers gedrückt. Durch die Wahl geeigneter Öffnungen läßt sich die Form der krümeligen vorgeformten Mischung bestimmen. Geeignete Öffnungen sind beispielsweise eine Rundlochung (z.B. nach DIN 24041) in diagonal versetzten oder in geraden Reihen, eine Quadratlochung (z.B. nach DIN 24042) in diagonal versetzten oder in geraden Reihen, eine Langlochung (z.B. nach DIB 24043) in geraden Reihen oder in geraden Reihen eckig oder Sonderlochungen wie Sechseck-, Geflecht-, Schlitzbrücken-, kombinierte Brücken- und Rund-, Kanten-, Dreieck-, schrägstehende Lang-, Fischgerätmuster-, Schachbrettmuster- oder Zierlochungen. Weiterhin können kombinierte Lochungen verwendet werden wie beispielsweise Klappenlochung, Raspellochung oder Jalousielochung.

Das durch Vorformung erhaltene Material ist krümelig und locker. Dieses lockere Material wird gesammelt und zu einem Formkörper ausgeformt. Aufgrund der offenen Oberfläche ist bei dieser vorgeformten Ausführungsform die Porendiffusion der Feuchtigkeit günstiger, weshalb höhere Trocknungstemperaturen verwendet werden können. Vorzugsweise werden aus vorgeformtem Material hergestellte Formkörper bei Temperaturen zwischen 90°C und 110°C getrocknet. Weiterhin hat sich gezeigt, daß eine Verdichtung der Oberfläche nur einen geringen Einfluß auf die Trocknungsgeschwindigkeit hat.

Durch die Vorformung wird das feuchte Material aufgelockert, so daß eine Vielzahl von verschiedenen Hohlräumen und Poren in einem aus diesem Material gebildeten Formköper vorliegt. Der wärmeisolierende Formkörper enthält in dieser Ausführungsform nach dem Trocknen eine Vielzahl von feinen Poren und Hohlräumen. Durch dieses Einbringen zusätzlicher Poren wird eine Reduzierung des Raumgewichts des Hohlkugelformkörpers von etwa 450 kg/m$^3$ auf vorzugsweise unter 350 kg/m$^3$ erreicht.

Zur Optimierung des Bindemittelanteils und zur Reduzierung der Dichte des Formkörpers ist es notwendig, daß die Hohlkugeln eine geringe innere Porosität aufweisen. Die Porosität wird definiert als das Verhältnis des Hohlraumvolumens in einem Festkörper zu dessen Gesamtvolumen. Für diese Art der Definition ist es unerheblich, ob die Poren miteinander in Verbindung stehen oder nicht. Das Porenvolumen bezeichnet den prozentualen Anteil des Volumens der Zwischenräume vom Gesamtvolumen einer Schüttung von Festkörpern. Bei einer Schüttung mit einem Gesamtvolumen Vg und z Einzelkörpern vom Volumen VE beträgt das Porenvolumen E:

$$\text{Zwischenraumvolumen} : \text{Gesamtvolumen} = (Vg - z \times VE) : Vg$$

bei einer Kugelschüttung ist E = 0,4, d.h. 60% des Raumes sind von Kugeln ausgefüllt. Werden Kugeln eingesetzt, die hohl und geschlossen sind, ändert dies nicht das so definierte Porenvolumen. Die Schüttdichte verringert sich jedoch um einen Faktor > 10.

Eine geringe innere Porosiät wird erreicht, wenn die Hohlkugeln geschlossen sind und das Bindemittel nicht in das Innere der Hohlkugeln dringen kann. Die Hohlkugeln werden deshalb vor der Vermischung mit dem Bindemittel auf Beschädigungen kontrolliert. Dies kann z.B. dadurch erfolgen, daß die Hohlkugeln in Wasser gegeben werden, worauf beschädigte Kugeln absedimentieren während die unbeschädigten geschlossenen Hohlkugeln auf der Oberfläche des Wassers schwimmen, von wo sie abgeschöpft werden können. Um eine maximale Ausnutzung der Ausgangsmaterialien zu gewährleisten, werden beschädigte Kugeln fein vermahlen und der Formulierung wieder zugegeben ( im weiteren als "Rest Hohlkugeln" bezeichnet).

Vorzugsweise wird als Bindemittel ein anorganisches Bindemittel verwendet. Zur Herstellung der wärmeisolierenden Formkörper können handelübliche und dem Fachmann bekannte Hohlkugeln aus keramischen, feuerfesten oder feuerbeständigen Materialien sowie herkömmliche anorganische Bindemittel wie kolloidale Kieselsäure oder/und Aluminiumsole wie s. B. Aluminiumhydroxichlorid oder/und Wasserglas oder/und boehmithaltige Bindemittel oder/und Monoaluminiumposphat oder/und Phosphorsäure oder/und Aluminiumoxidhydroxid oder/und Aluminiumazetat oder/und Aluminiumnitrat verwendet werden.

Weiterhin umfaßt die Erfindung die Verwendung der erfindungsgemäß hergestellten wärmeisolierenden Formkörper zur Wärmedämmung.

Die Erfindung umfaßt außerdem wärmeisolierende Formkörper, die mit dem erfindungsgemäßen Verfahren erhalten werden.

Die Erfindung wird durch die beigefügten Figuren näher erläutert, worin 1 bis 10 die erfindungsgemäße Herstellung des Formkörpers darstellen. Fig. 1 bis Fig. 10 veranschaulichen zudem die Verwendung eines Vorformers wobei die Austrittsmatrix durch eine unterbrochene Linie dargestellt ist.

Fig. 1      zeigt die Vorformung mittels eines Presse.
Fig. 2      zeigt die Vorformung mittels eines Stempels.
Fig. 3      veranschaulicht die Vorformung mittels eines rotierenden und verschiebbaren Stempels.
Fig. 4      stellt die Vorformung mit einem rotierenden offenen Schiebekörper dar.
Fig. 5      zeigt die Vorformung mit einem rotierenden Presswerkzeug.
Fig. 6      veranschaulicht die Vorformung mit einem rotierenden Schieber.
Fig. 7      stellt die Vorformung mit einer Schnecke dar.
Fig. 8      zeigt die Kürzung der Abschnitte der vorgeformten Mischung mit einem Messer.
Fig. 9      zeigt Formkästen mit vorgeformter feuchter Mischung.
Fig. 10     veranschaulicht die Texturierung einer Platte mittels Vorformung.

Die Erfindung wird durch die folgenden Beispiele näher erläutert:

Beispiel 1:

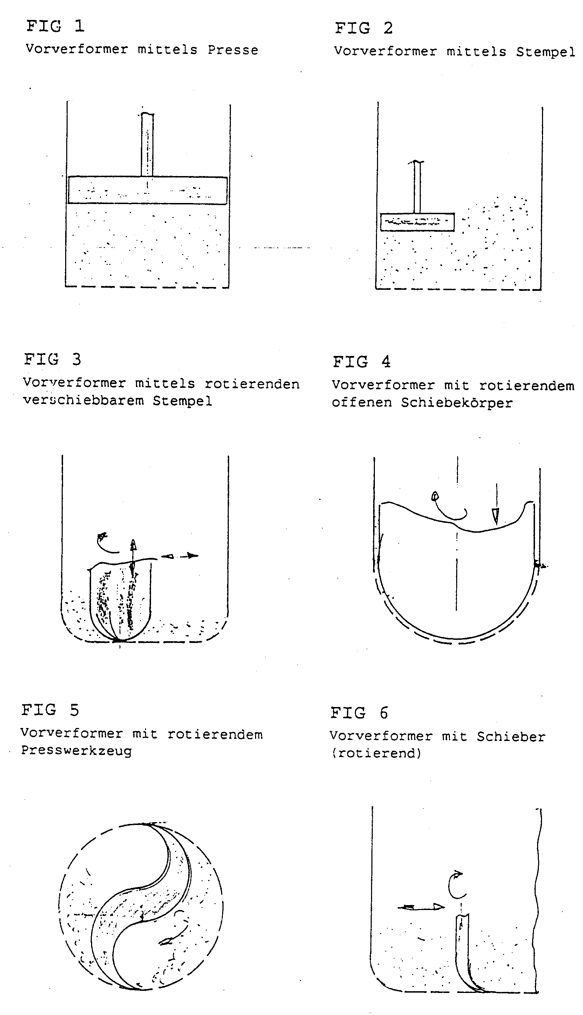

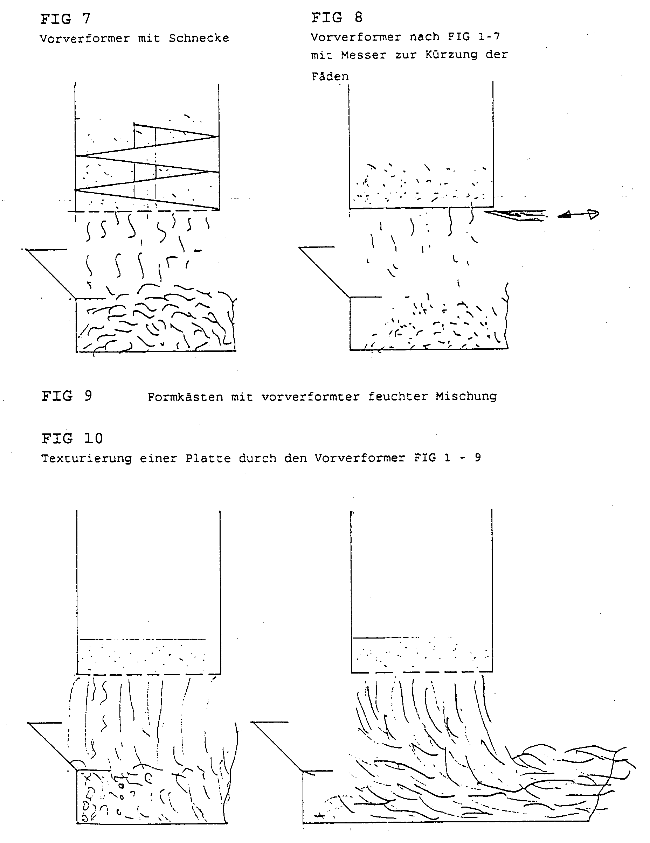

1 kg $Al_2O_3$-$SiO_2$ Hohlkugeln mit einem Körnungsdurchmesser von 40 - 300µm werden mit 0,20 kg gemahlenen "Rest Hohlkugeln" gemischt. Nach Zugabe von 0,6 kg kollodiale Kieselsäure und 0,1 kg Monoaluminiumposphat erfolgt eine homogene Vermischung der Ausgangsstoffe. Aus dieser Mischung können wärmeisolierende Formkörper direkt hergestellt werden oder diese feuchte Mischung wird durch Pressen, durch Düsen oder Siebe vorgeformt und anschließend zu einem Formkörper ausgeformt, wie in Fig. 1 bis Fig. 10 dargestellt. Die Formkörper werden getrocknet und gebrannt.

Die so erhaltenen wärmeisolierenden Formkörper zeichnen sich durch Formstabilität und gute Festigkeit aus, weshalb sie z.B. zum Ofenbau geeignet sind.

Die Wärmeleitfähigkeiten für einen nach Vorformung erhaltenen Formkörper sind in Tabelle 1 dargestellt. Die Wärmeleitfähigkeiten wurden nach der Heißdrahtmethode bestimmt, bei der der Verlauf des Temperaturfeldes einer idealisierten linienförmigen Wärmequelle in einem zu vermessenden Material ermittelt wird. Der Temperaturanstieg des Heißdrahtes wird zeitabhängig direkt mit Hilfe eines Thermoelements gemessen. Beim Paralleldrahtverfahren wird der Temperaturanstieg im Probekörper in einem definierten Abstand vom Heißdraht gemessen.

Tabelle 1

| Temperatur °C | Wärmeleitfähigkeit [W/mK] |
|---|---|
| 250 | 0,181 |
| 500 | 0,224 |
| 750 | 0,279 |
| 1000 | 0,358 |
| 1252 | 0,454 |

Beispiele für Wärmeleitfähigkeiten von herkömmlichen Feuerleichtsteinen zeigt Tabelle 2:

Tabelle 2

| Temperatur °C | Wärmeleitfähigkeit [W/mK] von | | | |
|---|---|---|---|---|
| | Leichtschamotte 0-4mm | Magnesitstein | Korundstein | Feuerleichtbeton (0,9g/cm$^3$) |
| 200 | 3,1 | 13 | 12 | 3,1 |
| 400 | 3,7 | 11 | 7,5 | 2,9 |
| 600 | 4,3 | 8 | 5,5 | 3 |
| 800 | 4,7 | 6 | 5 | 3,2 |
| 1000 | 5,9 | 5 | 4,5 | 3,5 |
| 1200 | -- | 4 | 4 | -- |

Die erfindungsgemäßen Formkörper zeigen deutlich bessere Wärmeleitfähigkeitseigenschaften als herkömmliche Feuerleichtsteine.

Beispiel 2:

1 kg Korundhohlkugeln mit einem Körnungsdurchmesser von 40 bis 200µm werden mit 0,10 kg gemahlenen "Rest Hohlkugeln" gemischt. Nach Zugabe von 0,50 kg einer 25 Masse-%-haltigen Lösung Aluminiumhydroxychlorid mit einer mittleren Bruttozusammensetzung $Al_2(OH)_5Cl_{2\text{-}3}$ $H_2O$ erfolgt eine homogene Vermischung der Ausgangsstoffe. Aus dieser Mischung können wärmeisolierende Formkörper direkt hergestellt werden oder diese feuchte Mischung wird durch Pressen durch Düsen oder Siebe vorgeformt und anschließend zu einem Formkörper ausgeformt, wie in Fig. 1 bis Fig. 10 dargestellt.

Anschließend wird der Formkörper getrocknet. Im Verlauf der Trocknung wird im Formkörper enthaltenes Wasser entfernt, wobei der Gehalt an Wasser y (g $H_2O$/g Trockengewicht) von anfänglich 0,175 in 100 min auf $y_{Krit}$ = 0,075 abnimmt. Nach etwa 220 min ist y < 0,01. Der getrocknete Formkörper wird bei einer Temperatur von etwa 1600°C gebrannt. Die Oberflächen- bzw. Kerntemperatur des Körpers steigt kontinuierlich an, bis nach etwa 230 - 250 min eine Oberflächentemperatur von etwa 1600°C und eine Kerntemperatur von etwa 1550°C erreicht ist.

Beim Brennen bei höheren Temperaturen wird aus dem Aluminiumhydroxychlorid Wasser und Salzsäure abgespalten. Die Abspaltung von Salzsäure kann durch Verwendung von z.B. Aluminiumoxidhydroxid, Aluminiumnitrat-Hydrat oder Aluminiumazetat vermieden werden. Mit steigender Temperatur bilden sich Aluminiumhydroxidgele, $\gamma$-Aluminiumhydroxid und schließlich $\alpha$-Aluminiumoxid (Korund)

$$(Al_2 (OH)_5 Cl_{2\text{-}3} H_2O \rightarrow Al (OH)_3\text{-Gel} \rightarrow \gamma\text{-}Al_2O_3 \rightarrow \alpha\text{-}Al_2O_3).$$

Ein so hergestellter wärmeisolierender Formkörper besteht aus ca. 99,7% $Al_2O_3$ und kann bis zu Temperaturen von mehr als 1800°C eingesetzt werden. Die Wärmeleitfähigkeiten für direkt hergestellte und vorgeformt hergestellte Formkörper sind in Tabelle 2 angegeben.

Tabelle 3

| Temperatur °C | direkt hergestellter Formkörper [W/mK] | vorgeformt hergestellter Formkörper [W/mK] |
|---|---|---|
| 250 | 0,709 | 0,321 |
| 500 | 0,552 | 0,304 |
| 750 | 0,504 | 0,372 |
| 1000 | 0,508 | 0,418 |
| 1250 | 0,548 | 0,528 |

**Patentansprüche**

1. Verfahren zur Herstellung von wärmeisolierenden Formkörpern
**dadurch gekennzeichnet,**
daß der Formkörper aus einer feuchten Mischung von Ausgangsmaterialien umfassend keramische, feuerfeste oder feuerbeständige Hohlkugeln und feuerfeste oder feuerbeständige Bindemittel hergestellt und anschließend getrocknet wird.

2. Verfahren nach Anspruch 1
**dadurch gekennzeichnet,**
daß der Formkörper bei 50°C bis 70°C getrocknet wird.

3. Verfahren nach Anspruch 1 oder 2
**dadurch gekennzeichnet,**
daß der Formkörper nach Trocknung zur Aushärtung der Bindemittel gebrannt wird.

4. Verfahren nach einem der Ansprüche 1 bis 3
**dadurch gekennzeichnet,**
daß Hohlkugeln mit einem Durchmesser von 10 - 600 $\mu$m und einer Schüttdichte von weniger als 500 kg/m$^3$ verwendet werden.

5. Verfahren nach einem der Ansprüche 1 bis 4
**dadurch gekennzeichnet,**
daß das Gewichtsverhältnis von Hohlkugeln zu Bindemittel in der Ausgangsmischung 95 : 5 bis 20 : 80 beträgt.

6. Verfahren nach einem der Ansprüche 1 bis 5
**dadurch gekennzeichnet,**
daß der Formkörper mit einem Raumgewicht von weniger als 500 kg/m$^3$ hergestellt wird.

7. Verfahren nach einem der Ansprüche 1 bis 6,
**dadurch gekennzeichnet,**
daß der Formkörper direkt aus der feuchten Ausgangsmischung hergestellt und anschließend getrocknet wird.

8. Verfahren nach einem der Ansprüche 1 bis 6
**dadurch gekennzeichnet,**
daß die feuchte Ausgangsmischung zunächst vorgeformt wird und dann aus dem vorgeformten Material der Formkörper hergestellt und anschließend getrocknet wird.

9. Verfahren nach Anspruch 8
**dadurch gekennzeichnet,**
daß die Ausgangsmischung durch Drücken oder Pressen durch Düsen oder Siebe vorgeformt wird.

10. Verfahren nach einem der Ansprüche 8 oder 9
**dadurch gekennzeichnet,**
daß aus der Ausgangsmischung bei der Vorformung ein krümeliges und lockeres Material gebildet wird.

11. Verfahren nach einem der Ansprüche 8 bis 10
**dadurch gekennzeichnet,**
daß der aus vorgeformtem Material hergestellte Formkörper bei Temperaturen zwischen 90°C und 110°C getrocknet wird.

12. Verfahren nach einem der Ansprüche 8 bis 11
**dadurch gekennzeichnet,**
daß durch die Vorformung zusätzliche Poren oder/und Hohlräume im Formkörper erzeugt werden.

13. Verfahren nach einem der Ansprüche 8 bis 12
**dadurch gekennzeichnet,**
daß man einen Formkörper mit einem Raumgewicht von weniger als 350 kg/m$^3$ herstellt.

14. Verfahren nach einem der Ansprüche 1 bis 13
**dadurch gekennzeichnet,**
daß als Bindemittel ein anorganisches Bindemittel verwendet wird.

15. Verfahren nach einem der Ansprüche 1 bis 14
**dadurch gekennzeichnet,**
daß als anorganisches Bindemittel kolloidale Kieselsäure oder/und Aluminiumsole oder/und Wasserglas oder/und Boehmit oder/und Monoaluminiumphosphat oder/und Phosphorsäure oder/und Aluminiumoxidhydroxid oder/und Aluminiumazetat oder/und Aluminiumnitrat verwendet wird.

16. Verwendung eines nach einem der Ansprüche 1 bis 15 hergestellten wärmeisolierenden Formkörpers zur Wärmedämmung.

17. Wärmeisolierender Formkörper erhältlich nach einem der Ansprüche 1 bis 15.

## FIG 1

Vorverformer mittels Presse

## FIG 2

Vorverformer mittels Stempel

## FIG 3

Vorverformer mittels rotierenden
verschiebbarem Stempel

## FIG 4

Vorverformer mit rotierendem
offenen Schiebekörper

## FIG 5

Vorverformer mit rotierendem
Presswerkzeug

## FIG 6

Vorverformer mit Schieber
(rotierend)

**FIG 7**
Vorverformer mit Schnecke

**FIG 8**
Vorverformer nach FIG 1-7
mit Messer zur Kürzung der
Fäden

**FIG 9**     Formkästen mit vorverformter feuchter Mischung

**FIG 10**
Texturierung einer Platte durch den Vorverformer FIG 1 - 9